Europäisches Patentamt

European Patent Office

Office européen des brevets

(11) Numéro de publication: **0 157 659**
**B1**

(12) **FASCICULE DE BREVET EUROPEEN**

(45) Date de publication du fascicule du brevet: **29.08.90**

(51) Int. Cl.⁵: **B 62 H 3/12,** B 60 R 9/10

(21) Numéro de dépôt: **85400222.7**

(22) Date de dépôt: **11.02.85**

(54) Dispositif de support de cycle.

(30) Priorité: **09.02.84 FR 8401986**

(43) Date de publication de la demande:
**09.10.85 Bulletin 85/41**

(45) Mention de la délivrance du brevet:
**29.08.90 Bulletin 90/35**

(84) Etats contractants désignés:
**AT BE CH DE FR GB IT LI LU NL SE**

(56) Documents cités:
**WO-A-82/00023**
**US-A-4 392 572**

(73) Titulaire: **Roll, Claude**
**1, rue de Sénarmont**
**F-28410 Broue (FR)**

(72) Inventeur: **Roll, Claude**
**1, rue de Sénarmont**
**F-28410 Broue (FR)**

(74) Mandataire: **Boivin, Claude**
**9, rue Edouard-Charton**
**F-78000 Versailles (FR)**

Courier Press, Leamington Spa, England.

## Description

La présente invention a pour objet un dispositif pour supporter un cycle en position verticale.

Le maintien vertical d'un cycle est en général assuré par un crochet auquel le cycle est suspendu, soit par une roue, soit par le cadre et qui ne donne pas au cycle une position stable.

Le document Wo-A-8 200 023 (première partie de la revendication 1) décrit un local d'entreposage de cycles dont la porte, montée pivotante autour d'un axe horizontal, comprend des moyens d'attache du guidon d'un cycle et, quand elle est mise en position verticale, constitue un support sur lequel la selle du cycle peut prendre appui. Mais cette porte ne peut évidemment pas être déplacée et ne peut être utilisée n'importe où.

Le dispositif selon l'invention permet de supporter un cycle en position stable tout en pouvant être placé dans n'importe quel endroit désiré.

Ce dispositif est caractérisé en ce que les moyens d'attache du guidon sont constitués par une paire de crochets et en ce que cette paire de crochets et le support sont fixés de manière réglable sur un même montant fixé à une embase.

Les deux crochets peuvent être indépendants l'un de l'autre; mais ils sont de préférence solidaires l'un de l'autre.

On a décrit ci-après, à titre d'exemple non limitatif, un mode de réalisation du dispositif selon l'invention, avec référence aux dessins annexés dans lesquels:

La Figure 1 est une vue latérale du dispositif;

La Figure 2 est une vue en perspective du crochet;

La Figure 3 est une vue en perspective du support de selle;

La Figure 4 est une vue en perspective d'un trépied;

La Figure 5 est une vue en perspective d'un socle formant embase.

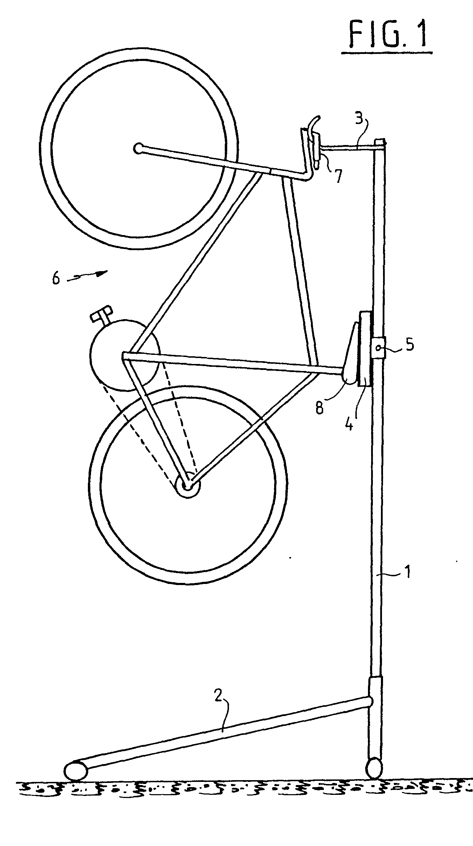

Tel qu'il est représenté aux Figures 1 à 4, le dispositif selon l'invention comprend un montant vertical 1 fixé à un trépied 2. A la partie supérieure de ce montant est fixée une paire de crochets 3 disposés l'un à côté de l'autre, l'ensemble ayant la forme d'un guidon de course inversé. Un support de selle 4 peut être monté coulissant sur le montant 1 et peut être fixé par une vis 5 dans la position désirée.

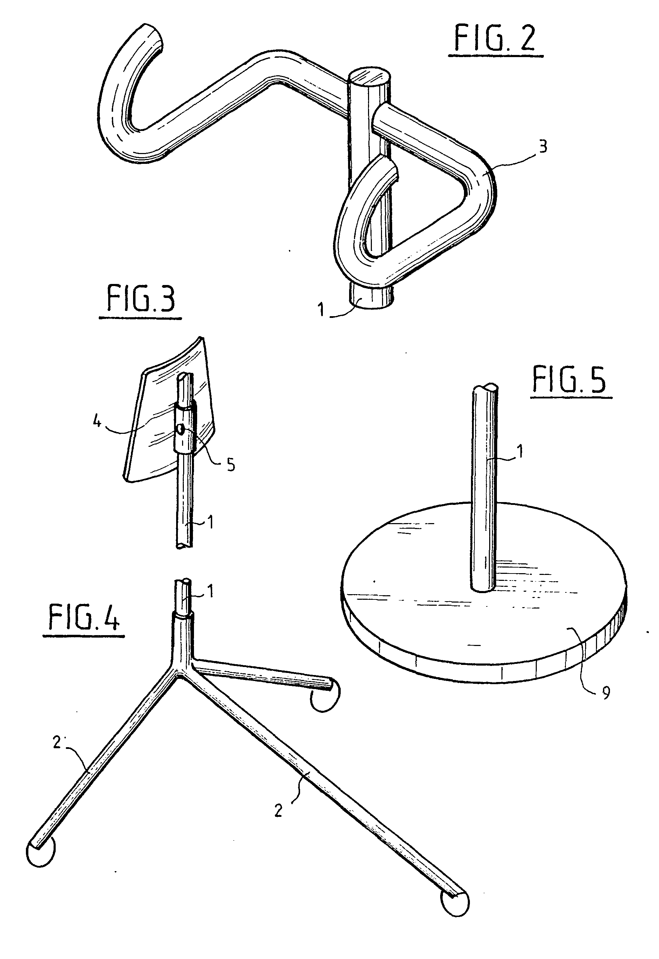

Pour maintenir un cycle 6, il suffit d'accrocher son guidon 7 aux crochets 3 après avoir réglé le support 4 de façon que la selle 8 du cycle vienne reposer sur lui. A la Figure 5, le trépied 2 est remplacé par un socle 9.

## Revendications

1. Dispositif pour maintenir un cycle en position verticale qui comprend des moyens d'attache du guidon (7) du cycle (6) et un support dans lequel peut prendre appui la selle (8) de ce cycle en position verticale, caractérisé en ce que les moyens d'attache du guidon sont constitués par une paire de crochets (3) et en ce que cette paire de crochets (3) et le support (4) sont fixés de manière réglable sur un même montant (1) fixé à une embase (2 ou 9).

2. Dispositif selon la revendication 1, caractérisé en ce que les deux crochets (3) de la paire sont solidaires l'un de l'autre.

3. Dispositif selon la revendication 2, caractérisé en ce que l'ensemble des deux crochets a la forme d'un guidon de course renversé.

4. Dispositif selon l'une des revendications 1 à 3, caractérisé en ce que l'embase est constituée par un trépied (2).

5. Dispositif selon l'une des revendications 1 à 3, caractérisé en ce que l'embase est constituée par un socle (9).

## Patentansprüche

1. Vorrichtung zum Festhalten eines Fahrrades in vertikaler Position, welche Mittel zur Halterung des Lenkers (7) des Fahrrades (6) aufweist sowie eine Stütze, an die sich der Sattel (8) dieses Fahrrades in der vertikalen Position anlegen kann, dadurch gekennzeichnet, daß die Mittel zur Halterung des Lenkers durch ein Paar Haken (3) gebildet werden und daß dieses Paar Haken (3) und die Stütze (4) in verstellbarer Weise an einem gemeinsamen Ständer (1) befestigt sind, der an einem Untersatz (2 oder 9) befestigt ist.

2. Vorrichtung nach Anspruch 1, dadurch gekennzeichnet, daß die beiden Haken (3) des Paares fest miteinander verbunden sind.

3. Vorrichtung nach Anspruch 2, dadurch gekennzeichnet, daß die Gesamtheit der beiden Haken die Form eines umgekehrten Lauflenkers besitzt.

4. Vorrichtung nach einem der Ansprüche 1 bis 3, dadurch gekennzeichnet, daß der Untersatz als Dreifuß (2) ausgebildet ist.

5. Vorrichtung nach einem der Ansprüche 1 bis 3, dadurch gekennzeichnet, daß der Untersatz als Sockel (9) ausgebildet ist.

## Claims

1. Device for holding a cycle in the vertical position which comprises means for attaching the handlebar (7) of the cycle (6) and a support in which the saddle (8) of this cycle may bear in a vertical position, characterized in that the means for attaching the handlebar are formed by a pair of hooks (3) and in that this pair of hooks (3) and the support (4) are fixed adjustably to the same upright (1) which is fixed to a base (2 or 9).

2. Device according to claim 1, characterized in that the two hooks (3) of the pair are joined together.

3. Device according to claim 2, characterized in that the assembly of the two hooks has the shape of an inverted racing handlebar.

4. Device according to one of claims 1 to 3, characterized in that the base is formed by a tripod (2).

5. Device according to one of claims 1 to 3, characterized in that the base is formed by a stand (9).

## FIG. 1

FIG. 2

FIG.3

FIG.5

FIG.4